(19) Europäisches Patentamt
European Patent Office
Office européen des brevets

(11) **EP 1 707 310 B1**

## (12) EUROPÄISCHE PATENTSCHRIFT

(45) Veröffentlichungstag und Bekanntmachung des Hinweises auf die Patenterteilung:
**22.07.2009 Patentblatt 2009/30**

(51) Int Cl.:
***B23Q 11/00*** *(2006.01)*      ***B23Q 15/24*** *(2006.01)*
***G05B 19/404*** *(2006.01)*

(21) Anmeldenummer: **06006095.1**

(22) Anmeldetag: **24.03.2006**

(54) **Verfahren zur Erweiterung der Bandbreite eines Antriebssystems mit einem Motor und angekoppelter schwingungsfähiger Mechanik, die vorzugsweise auf Kugelrollspindelsystemen basiert, sowie Vorschubantrieb zur Durchführung eines solchen Verfahrens**

Process for expanding the belt width of a drive system comprising a motor and coupled vibratory mechanical components, preferably based on ball screw systems and feeder drive for performing such a process

Procédé d'extension de la largeur de bande d'un système d'entraînement comprenant un moteur et un système mécanique oscillant couplé, de préférence sur la base de systèmes à vis à billes, ainsi que commande d'avance pour la mise en oeuvre d'un tel procédé

(84) Benannte Vertragsstaaten:
**CH FR IT LI**

(30) Priorität: **01.04.2005 DE 102005016437**

(43) Veröffentlichungstag der Anmeldung:
**04.10.2006 Patentblatt 2006/40**

(73) Patentinhaber: **FISW-Steuerungstechnik GmbH 70174 Stuttgart (DE)**

(72) Erfinder: **Pritschow, Günter, Prof.Dr.Ing.Dr.h.c. 76534 Baden-Baden (DE)**

(74) Vertreter: **Jackisch-Kohl, Anna-Katharina Patentanwälte Jackisch-Kohl & Kohl Stuttgarter Strasse 115 70469 Stuttgart (DE)**

(56) Entgegenhaltungen:
**DE-A1- 3 729 649         DE-A1- 10 117 460
DE-A1- 10 135 220        DE-A1- 19 810 996
US-A- 3 640 138**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Erweiterung der Bandbreite eines Antriebssystems mit einem Motor und angekoppelter schwingungsfähiger Mechanik, die vorzugsweise auf Kugelrollspindelsystemen basiert, nach dem Oberbegriff des Anspruches 1 sowie einen Vorschubantrieb zur Durchführung eines solchen Verfahrens nach dem Oberbegriff des Anspruches 4.

Solche Antriebssysteme mit Motor und schwingungsfähiger Mechanik sind in typischer Weise im Werkzeugmaschinenbau oder in der Robotertechnik in Form von Kugelrollspindelantrieben, Zahnstangen/Ritzelantrieben oder rotatorischen Antrieben mit Getriebeuntersetzungen anzutreffen. Solche Antriebssysteme besitzen aufgrund ihrer angekoppelten mechanischen Massen m über eine nachgiebige Feder c in Form von Getrieben oder Kupplungseinheiten mindestens eine Resonanzfrequenz (Eigenfrequenz) $\omega_M$, die sich nach der bekannten Gleichung $\omega_M = \sqrt{\dfrac{c}{m}}$   er-rechnet.

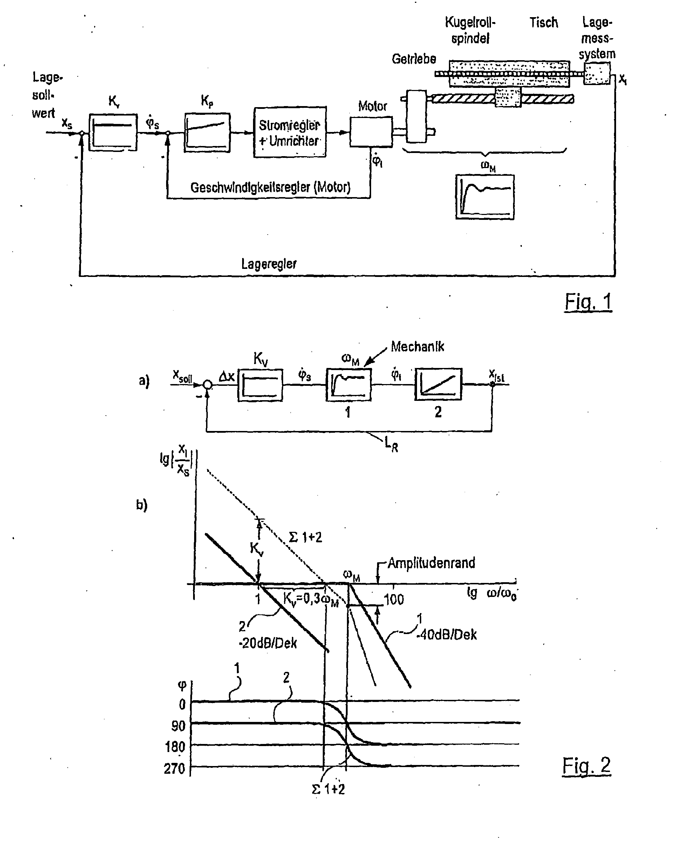

Aus der Literatur (siehe Boelke, K., Analyse und Beurteilung von Lagesteuerungen für numerisch gesteuerte Werkzeugmaschinen, Dr.-Ing. Diss. ISW, Univ. Stuttgart 1977, ISNB 3-540-08217-4, Springer-Verlag, Berlin, New York); Swoboda, W., Digitale Lageregelung für Maschinen mit schwach gedämpften schwingungsfähigen Bewegungsachsen, Dr.-Ing. Diss. ISW, Univ. Stuttgart 1987, ISBN 3-540-18101-6, Springer-Verlag, Berlin, New York) sind Lösungen bekannt, solche Systeme als lage- oder geschwindigkeitsgeregelte Systeme auszulegen. Fig. 1 zeigt eine typische Kaskadenschaltung von Geschwindigkeits- und Lageregelkreis mit dem Lageregelungsverstärkungsfaktor $K_V$ und dem Verstärkungsfaktor $K_P$ des Geschwindigkeitsregelkreises. Der Lagesollwert $x_S$ wird mittels des Regelungsverstärkungsfaktors $K_V$ und des Verstärkungsfaktors $K_P$ einem Stromregler und Umrichter als Solldrehzahl $\varphi_s$ zugeführt, der einen Motor regelt. Seine Ist-Drehzahl $\varphi_i$ wird im Motor-Drehzahlregelkreis zurückgeführt. Der Motor treibt über ein Getriebe eine Kugelrollspindel an, auf der eine Spindelmutter sitzt, die Teil eines Maschinenschlittens oder dergleichen ist. Je nach Drehrichtung der Kugelrollspindel wird der Maschinenschlitten in die jeweilige Richtung bzw. Lage verschoben. Mit einem Lagemesssystem wird die Ist-Lage $x_i$ des Maschinenschlittens erfasst und im Lageregelkreis zurückgeführt. Die Ist-Drehzahl $\dot{\varphi}_i$ des Motors und die Ist-Lage $x_i$ des Maschinenschlittens werden mit dem Lagesollwert $x_s$ sowie der Solldrehzahl $\dot{\varphi}_s$ verglichen und ein entsprechendes Regelsignal zur Ansteuerung des Motors erzeugt. Sofern die Band-breite $\omega_A$ des Geschwindigkeitsregelkreises des Motors deutlich größer ist als die mechanische Eigenfrequenz $\omega_M$, lässt sich das Antriebssystem nach Fig. 1 als ein Modellsystem 3. Ordnung ableiten, wobei die schwingungsfähige Mechanik als System 2. Ordnung in Reihe geschaltet ist mit der Geschwindigkeits-Lagewandlung 1. Ordnung zu einem Lageregler $L_R$ mit der Regelungsverstärkung $K_V$ gemäß Fig. 2a.

Der $K_V$-Faktor sollte möglichst groß sein, da er bei vorgegebener Sollgeschwindigkeit $\dot{x}_s$ für den Maschinen-schlitten 12 über die Bleichung $\Delta x \cdot K_v = \dot{x}_s$ die Regelabweichung der Lage $\Delta x$ bestimmt und zudem die Steifigkeit einer Achse beeinflusst.

Wie aus dem Bode-Diagramm für ein solches System nach Fig. 2b ablesbar ist, kann der $K_V$-Faktor auch als Bandbreite des Lagereglers $L_R$ interpretiert werden mit der Dimensionierungsregel $K_V < 0,3$ $\omega_M$, wobei $\omega_M$ durch die schwingungsfähige angekoppelte Mechanik der Achse einer Werkzeugmaschine oder eines Industrieroboters bestimmt ist und die Größe von $K_v$ sich zusätzlich durch die Dämpfung der Resonanz $\omega_M$ bestimmt. Für $\omega_M = 2\pi f_M$ liegen typische Werte für Werkzeugmaschinen bei $f_M < 50$ Hz und für die Hauptachsen von Industrierobotern bei $f_M < 20$ Hz. Damit lässt sich der $K_v$-Faktor kaum über $K_v < 0,3 \cdot \omega_M = 0,3 \cdot 2\pi \cdot 20...50 \leq 100s^{-1}$ steigern. Dadurch lassen sich hohe dynamische Genauigkeiten und Störsteifigkeiten des Antriebssystems nicht erreichen.

Eine andere Möglichkeit zur Erzielung höherer Kv-Werte bieten die sogenannten "Direktantriebe", bei denen die "Feder c" des tief abgestimmten, mechanischen Schwingers in Form einer Kugelrollspindel oder eines Getriebes ersatzlos ersetzt werden kann durch das direkte Wirkprinzip ohne Übersetzung.

Solche "Direktantriebe" sind jedoch erheblich teurer als getriebebehaftete Antriebslösungen und besitzen zudem nur begrenzte Kräfte oder Momente.

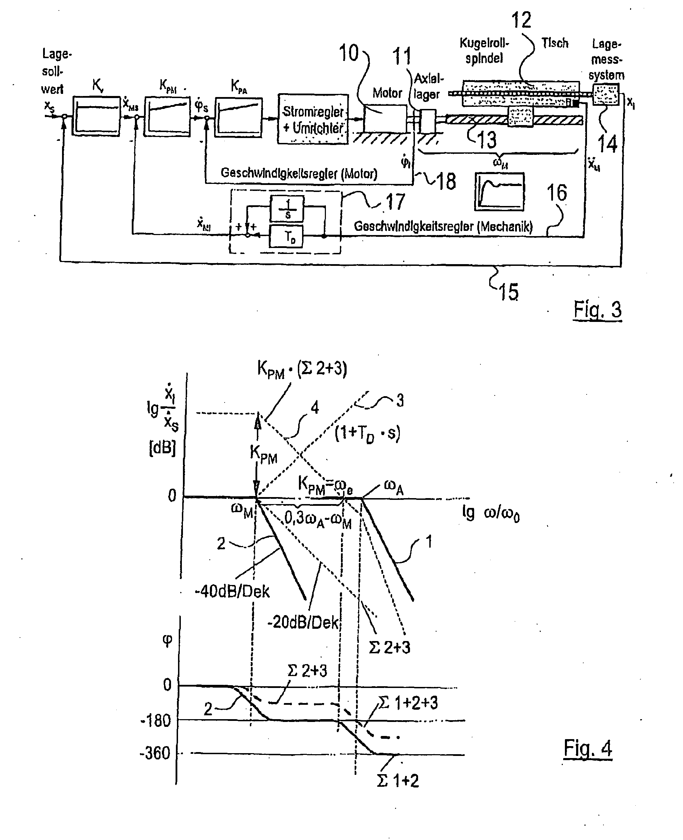

Eine weitere Möglichkeit zur Bandbreitenerhöhung speziell von Kugelrollspindelantrieben wird in der DE 101 35 220 A1 beschrieben (Fig. 3). Bei diesem bekannten System wird dem Geschwindigkeitsregler 18 des Motors 10 ein weiterer Geschwindigkeitsregler 16 der Mechanik 12, 13 kaskadenförmig überlagert. Der Motor 10 treibt über das Axiallager 11 die Kugelrollspindel 13 an, auf der der Maschinenschlitten 12 mit einer Spindelmutter sitzt. Der Maschinenschlitten 12 mit der Kugelrollspindel 13 bildet die Mechanik. Die Lage des Maschinenschlittens 12 wird mit dem Lagemesssystem 14 erfasst. Der so ermittelte Ist-Lagewert $x_i$ wird im Lageregelkreis 15 zurückgeführt und mit dem Lagesollwert $x_s$ verglichen. Die Ist-Drehzahl $\dot{\varphi}_i$ wird im Drehzahlregelkreis 18 des Motors 10 zurückgeführt und mit der Solldrehzahl $\dot{\varphi}_s$ verglichen. Die Ist-Größe $\dot{x}_{Mi}$ der Geschwindigkeit des Tisches wird gemäß Fig. 3 über ein Netzwerk 17 durch die Beschleunigung $\ddot{x}_{ML}$ der schwingungsfähigen Mechanik 12, 13 des Tisches beeinflusst, womit oberhalb der Resonanzfrequenz der schwingungsfähigen Mechanik eine Phasenrückdrehung erzeugt wird, die verhindern soll, dass in diesem Bereich die Phase des offenen Systems 180˚ erreicht. Auf diese Weise soll die Dynamik der geschwindigkeitsgeregelten Achse gesteigert und somit auch der $K_v$-Faktor erhöht werden.

Vorausgesetzt werden muss dabei allerdings, dass die der Resonanzfrequenz $\omega_M$ der Mechanik nachfolgende Tilgerfrequenz einen größeren Abstand zur Bandbreite des Geschwindigkeitsregelkreises 18 haben muss. Damit beschränkt sich die Anwendung nur auf Mechaniken mit entsprechenden Eigenschaften.

Mit der DE 37 29 649 wird ein weiterer Weg aufgezeigt, die Bandbreite eines Kugelrollantriebs zu erhöhen, wobei die Spindel hier fixiert, das heißt nicht drehbar, angeordnet ist und damit das zu beschleunigende Trägheitsmoment eines konventionellen Kugelrollspindelantriebs stark reduziert wird. Das hier vorliegende Potential zur Bandbreitenerhöhung bewegt sich je nach Anordnung bis in einen Bereich von +50%. Die Spindel ist steif federnd fixiert.

Aus der DE 101 17 460 A1 ist ein Verfahren bekannt, mit dem über eine Impulsentkopplung die Dynamik einer Servoachse erhöht wird. Dabei wird der Rückstoßimpuls des Maschinenschlittens durch die Gegenbewegung eines Reaktionsschlittens aufgenommen, wodurch eine Anregung des Maschinenbettes unterbleibt. Aufgrund der damit verbundenen mechanischen Auslegung eines Kugelrollspindelantriebs ist das Verfahren auf indirekte Lageregelung mit zusätzlicher Ausgleichsbewegung für die Rückentkopplung beschränkt.

Der Erfindung liegt die Aufgabe zugrunde, das gattungsgemäße Verfahren und den gattungsgemäßen Vorschubantrieb so auszubilden, dass die Bandbreite der Lageregelung eines Kugelrollspindelantriebs erweitert wird.

Diese Aufgabe wird beim gattungsgemäßen Verfahren erfindungsgemäß mit den kennzeichnenden Merkmalen des Anspruches 1 und beim gattungsgemäßen Vorschubantrieb erfindungsgemäß mit den kennzeichnenden Merkmalen des Anspruches 4 gelöst.

Beim erfindungsgemäßen Verfahren wird die Bandbreite $\omega_L$ der Lageregelung über die üblichen Grenzen hinaus erweitert, indem der lineare Frequenzgang der Mechanik erweitert wird. Dieses erreicht man, indem die Tilgerfrequenz der Mechanik durch eine nachgiebige Steifigkeit in Vorschubrichtung, zum Beispiel mit einer federnden Axiallageraufnahme der Kugelrollspindel, unterhalb der Resonanzfrequenz $\omega_M$ der Mechanik gelegt und zusätzlich bedämpft wird. Der Frequenzgang der Mechanik entspricht dann oberhalb der Resonanzfrequenz $\omega_M$ einem Glied 2. Ordnung, wobei die mechanische Resonanzfrequenz $\omega_M$ zunimmt und mit der axialen Dämpfung der Amplitudengang im Bereich der Tilgerfrequenz unterhalb der Resonanzfrequenz $\omega_M$ geglättet wird. Die Bandbreite des Lagereglers kann damit entsprechend gesteigert werden.

Wird bei einer weiteren Ausbildung ein weiterer Geschwindigkeitsregelkreis dem Geschwindigkeitsregelkreis des Motors kaskadenförmig überlagert, wobei der Ist-Geschwindigkeit mit der schwingungsfähigen Mechanik ein phasenrückdrehendes Signal über eine Beschleunigungserfassung überlagert wird, das eine Phasenreduzierung ab der Resonanzfrequenz $\omega_M$ der Mechanik erzeugt, lässt sich die Bandbreitensteigerung des zusätzlichen Geschwindigkeitsregelkreises und damit auch des Lageregelkreises über die Resonanzfrequenz $\omega_M$ hinweg steigern.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen

| | |
|---|---|
| Fig. 3 | in schematischer Darstellung den grundsätzlichen Aufbau eines erfindungsgemäßen Vorschubantriebes mit einem zusätzlichen Geschwindigkeitsregelkreis der Mechanik auf der Basis eines Beschleunigungssignales B, |
| Fig. 4 | die Amplituden und Phasenbedingungen für den zusätzlichen Geschwindigkeitsregelkreis der Mechanik gemäß Fig. 3 mit Hilfe eines Bode-Diagramms, |
| Fig. 5 | ein Blockschaltbild des zusätzlichen Geschwindigkeitsregelkrei- ses der Mechanik, |
| Fig. 6 | das typische Verhalten eines gemessenen Frequenzganges, |
| Fig. 7 | eine entsprechende Simulation mit einer Resonanzfrequenz $\omega_M$ bei etwa 30 Hz und einer Tilgerfrequenz bei etwa 100 Hz, |
| Fig. 8 und Fig. 9 | weitere Diagramme entsprechend Fig. 7 mit unterschiedlichen Resonanz- und Tilgerfrequenzen, |
| Fig. 10 | in schematischer Darstellung einen Teil des erfindungsgemäßen Vorschubantriebes mit einer nachgiebigen Abstützung eines Maschinenschlittens. |

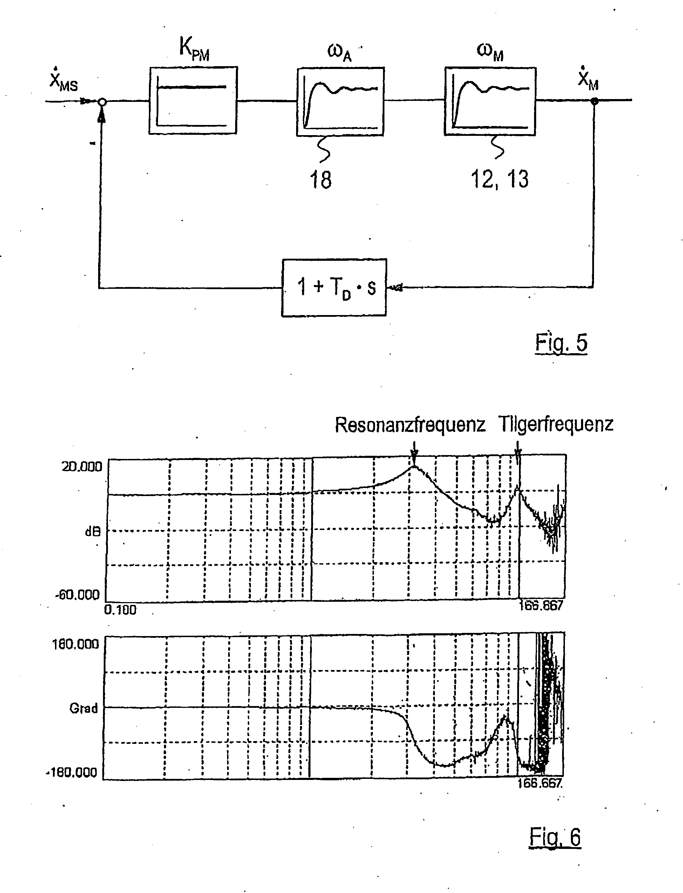

Die kaskadenförmig aufgebauten Geschwindigkeitsregelkreise 16, 18 gemäß Fig. 3 sind als Blockbild in Fig. 5 abgebildet und zeigen eine Reihenschaltung des Geschwindigkeitsregelkreises 18 des Motors 10 mit der hoch abge-

stimmten Bandbreite $\omega_A$ und dem mechanischen System 12, 13 mit der tief abgestimmten Eigenfrequenz $\omega_M$ in Reihe mit dem Verstärkungsglied $K_{PM}$ und dem phasendrehenden Glied 17 $(1+T_D \cdot s)$. Die Ist-Geschwindigkeit $\dot{x}_{Mi}$ des Maschinenschlittens 12 wird über das phasendrehende Glied 17 im Geschwindigkeitsregelkreis 16 zurückgeführt und mit der Sollgeschwindigkeit $\dot{x}_{Ms}$ verglichen und hieraus das Regelsignal für den Motor 10 erzeugt. Er treibt, wie anhand von Fig. 3 beschrieben worden ist, die Kugelrollspindel 13 an, auf der mit der Spindelmutter der Maschinenschlitten 12 sitzt.

Fig. 4 zeigt die Amplituden und die Phasenbedingungen für diesen zusätzlichen Geschwindigkeitsregelkreis 18 mit Hilfe eines Bode-Diagramms.

Aus Fig. 4 wird deutlich, dass das System mit der tief abgestimmten Eigenfrequenz $\omega_M$ die Phasen $\varphi$ über den Resonanzpunkt $\omega_M$ um $\varphi = -180°$ dreht (Phasenkurve 2). Um die Bandbreitenreserve $\omega_A - \omega_M$ zum Motorsystem mit der größeren Bandbreite $\omega_A$ nützen zu können, muss also oberhalb des Resonanzpunktes $\omega_M$ eine Phasenrückdrehung erfolgen (Kurven 2 + 3). Diese Phasenrückdrehung erfolgt durch das phasendrehende Glied 17 $(1 + T_D \cdot s)$ gemäß Fig. 4 und Fig. 5 mit der Dimensionierung $\omega_M = 1/T_D$. Damit erhält man den gezeichneten Frequenzgang der Kurve 3 nach Fig. 4. Die Reihenschaltung von Frequenzgang 3 mit dem Frequenzgang 2 des mechanischen Systems $\omega_M$ führt zum Frequenzgang $\Sigma 2+3$ mit einem Abfall von -20 db/Dek. oberhalb der Eigenfrequenz $\omega_M$. Auf diese Weise wird in der Summe die Phase von -180° auf -90° zurückgedreht (siehe Phasengang gemäß gestrichelter Kurve $\Sigma 2+3$), und die Verstärkung $K_{PM}$ kann auf den Wert $K_{PM} = 0.3 \omega_A - \omega_M$ angehoben werden, um noch mit genügender Phasenreserve der Summenkurve $4 = K_{PM} \cdot \Sigma 2+3$ durch den 0 dB Punkt des Amplitudenganges zu gehen. Dieser Durchtrittspunkt entspricht der Bandbreite $\omega_e$ des geschlossenen Geschwindigkeitsregelkreises der schwingungsfähigen Mechanik, d.h. die Verstärkung $K_{PM} = \omega_e$ bzw. die Bandbreitenreserve $\omega_e = 0.3 \omega_A - \omega_M$ kann genutzt werden zur Dynamikerweiterung der Anordnung über die Eigenfrequenz $\omega_M$ der schwingungsfähigen Mechanik hinaus.

Der Frequenzgang der Mechanik eines Kugelrollspindelantriebs nach Fig. 2 entspricht in idealer Weise einem Glied 2. Ordnung mit einem Abfall der Amplitude von -40 dB/Dek. nach der Resonanzfrequenz. Die Realität des Frequenzganges der Mechanik des Kugelrollspindelantriebs entspricht allerdings nur bis zur Resonanzfrequenz dieser idealisierten Annahme. Aufgrund der Eigenart der physikalischen Zusammenhänge eines Kugelrollspindelantriebs ergibt sich i.a. hinter der Resonanzfrequenz eine ausgeprägte Tilgerresonanzfrequenz, die durch das mitschwingende System der Spindelmasse in Verbindung mit der Axialsteifigkeit der Kugelrollspindel geprägt ist.

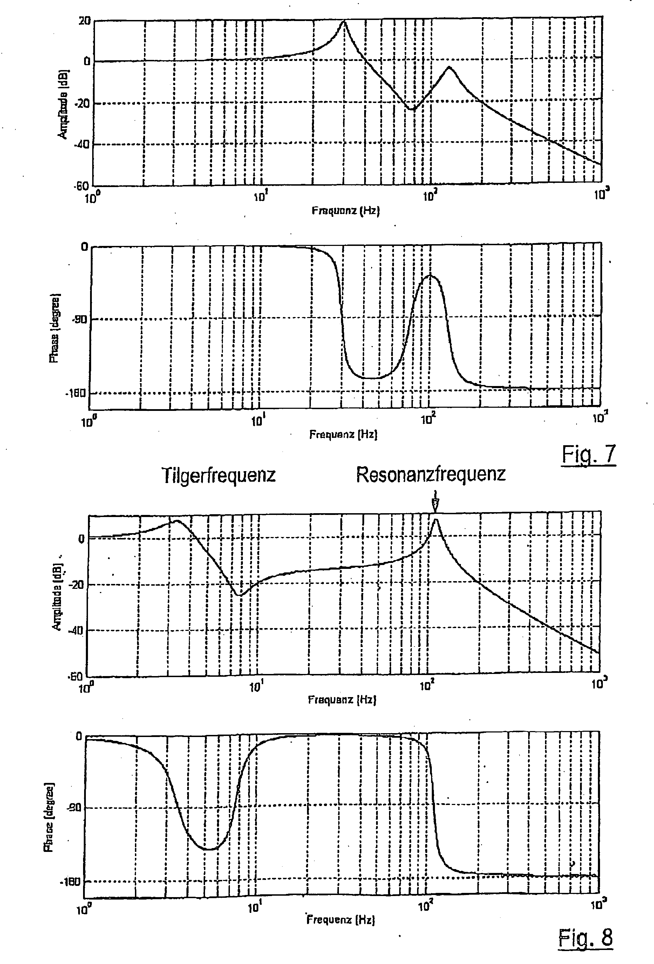

Fig. 6 zeigt das typische Verhalten eines gemessenen Frequenzganges, Fig. 7, das einer entsprechenden Simulation mit einer Resonanzfrequenz $\omega_M$ bei ca. 30 Hz und einer Tilgerfrequenz bei ca. 100 Hz. Kennzeichnend für die Tilgerfrequenz eines mitschwingenden Systems hinter der Resonanzstelle des anregenden Systems ist eine positive Phasendrückdrehung, die jedoch hinter der Tilgerresonanz mit steiler Flanke verschwindet. Kommen hier zur Phasendrehung von 180° durch die anregende Resonanz noch weitere Phasendrehungen hinzu, wie die Phasendrehung des Motorgeschwindigkeitsregelkreises 18 oder Phasendrehungen durch die Messglieder für $\dot{x}$ und $\ddot{x}$, so lässt sich die Phasenrückdrehung über das Netzwerk (phasendrehendes Glied) 17 mit der damit verbundenen Verstärkungsanhebung im + 20 dB/Dekade nur in den Fällen zur Bandbreitenerhöhung ausnutzen, bei denen ein genügend großer Abstand zwischen der Resonanzfrequenz der Mechanik und der Bandbreite des Geschwindigkeitsregelkreises 18 des Motors liegt, da die Amplitudenanhebung durch die Tilgerfrequenz mit der Verstärkungsanhebung der Phasenrückdrehung über der Odb-Linie des offenen Geschwindigkeitskreises 16 der Mechanik 12, 13 liegen kann und die Tilgereigenschaft den Amplitudenabfall von -40 dB/Dekade der mechanischen Resonanz damit deutlich zu höheren Frequenzen verschiebt, so dass sich an der 180° Summenphasenlinie nur dann eine stabile Reglereinstellung finden lässt, wenn die Tilgerfrequenz und damit auch die mechanische Resonanzfrequenz sich genügend weit entfernt von der phasendrehenden Bandbreitengrenze des Geschwindigkeitsregelkreises des Motors 18 befindet.

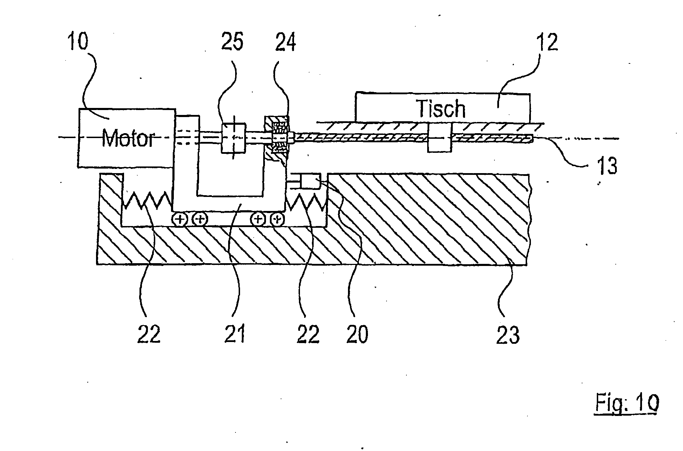

Nach dem erfindungsgemäßen Verfahren wird die Tilgerresonanz der Kugelrollspindel auf mechanische Weise so beeinflusst, dass sie nicht mehr störend wirken kann und zusätzlich auch die Dämpfung der mechanischen Resonanzstelle erhöht. Beim erfindungsgemäßen Verfahren wird im Gegensatz zum Stand der Technik das steif am Maschinenbett 23 befestigte Axiallager 24 (Fig. 10) federnd nachgiebig über eine Feder $C_M$ 22 so mit dem Maschinenbett 23 verbunden, dass die Tilgerfrequenz vor die anregende Resonanzfrequenz $\omega_M$ zu liegen kommt. $\omega_M$ ist dabei bestimmt durch die rotatorische Nachgiebigkeit der Spindel 13 sowie durch die Spindelträgheit und die Tischmasse. Die erfindungsgemäße Feder $c_M$ kann auf unterschiedliche Weise konstruktiv gestaltet werden, zum Beispiel als Tellerfeder für das Axiallager 24, als Spiralfeder für den Axiallagerhalter, als sehr nachgiebig gestaltetes Axiallager 24 selbst oder in Form eines Antriebssystems, das eine einstellbare Steifigkeit und Dämpfung erlaubt.

Für das System nach Fig. 7 ergibt sich damit für sonst gleiche Verhältnisse, jedoch einer um den Faktor 0.01 geringeren Axialfedersteifigkeit der neue Frequenzgang nach Fig. 8. Man erkennt, dass die Tilgerfrequenz mit ihrem Phasenminimum bei ca. 5 Hz nunmehr vor der Resonanzfrequenz $\omega_M$ liegt, wobei sich $\omega_M$ von 30 Hz nach ca. 100 Hz verlagert hat. Der Frequenzgang hinter der Resonanzstelle zeigt die gewünschte ideale Form eines Gliedes 2. Ordnung mit - 40 dB/Dek. Der starke Einbruch in der Amplitude vor der Resonanz ist beeinflusst durch das Verhältnis von Spindel- zu Tischmasse, das hier 0.1 beträgt.

Eine weitere Maßnahme zur Reduzierung des Einflusses der Massenverhältnisse auf den Frequenzgang der Mechanik, aber auch zur Resonanzdämpfung, wird durch ein zusätzliches Dämpfungsglied D, das parallel zur Feder

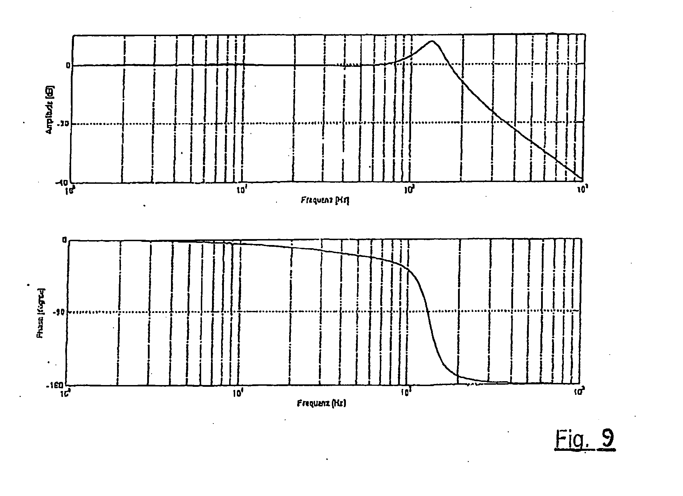

$c_M$ geschaltet wird, erreicht. Fig. 9 zeigt den Frequenzgang der Mechanik mit einer entsprechenden zusätzlichen Dämpfung 20 über ein geschwindigkeitsproportional wirkendes Dämpfungsglied D, wie es zum Beispiel bekannterweise als passives Element mittels eines doppeltwirkenden Hydraulikzylinders realisiert werden kann, dessen beide Seiten über eine Drossel verbunden sind, oder aber auch mit einem aktiv wirkenden Dämpfungsglied, das zum Beispiel mit Hilfe eines Piezostellers realisiert werden kann.

Fig. 10 stellt ein Beispiel eines Kugelrollspindelantriebes dar. Der Maschinenschlitten 12 sitzt mit der Spindelmutter auf der Kugelrollspindel 13. Sie ist mit dem wenigstens einen Axiallager 24 in einem beweglichen Wagen 21 abgestützt. Die Kugelrollspindel 13 ist über eine Kupplung 25 mit der Welle des Motors 10 gekuppelt, der mit dem Wagen 21 verbunden ist. Der Wagen 21 ist längs eines Maschinenbettes 23 in Achsrichtung der Kugelrollspindel 13 beweglich gelagert. Zur Erhöhung der translatorisch wirkenden Masse, die gegen die Masse $m_T$ des Tisches 12 wirkt, wird die Masse $m_S$ der Kugelrollspindel 13, die Masse $m_K$ der Kupplung 25 sowie die Masse $m_M$ des Motors 10 über den beweglichen Wagen 21 zusammengefasst, der sich über die Federn $c_M$ 22 und den Dämpfer D 20 gegen das Maschinenbett 23 abstützt.

Die damit beeinflussbare Dämpfung und die Erhöhung der mechanischen Resonanzstelle $\omega_M$ lässt sich positiv zur Erhöhung der Bandbreite $\omega_L = K_v$ des Lagereglers nutzen. Mit einem zusätzlichen Geschwindigkeitsregelkreis 16 (Fig. 3) ist auch eine Bandbreitenerhöhung über die Resonanzfrequenz $\omega_M$ hinaus möglich.

Über das nachgiebige Axiallager 24 in Verbindung mit der Spindelmasse $m_S$ ergibt sich zudem eine Ruckentkopplung auf das Maschinengestell 23, da ein Teil der Beschleunigungskraft, die auf die Tischmasse $m_T$ wirkt, von der Spindelmasse $m_S$ kompensiert wird.

Der Dämpfer 20 stützt sich benachbart zum Axiallager 24 am Maschinenbett 23 und am Wagen 21 ab. Der Dämpfer 20 weist eine geschwindigkeitsproportionale Dämpfung auf. Die Federn 22 stützen den Wagen 21 in beiden Achsrichtungen der Kugelrollspindel 13 am Maschinengestell 23 ab.

Bei einer weiteren (nicht dargestellten) Ausführungsform kann die Kugelrollspindel 13 stillstehen und die Bewegung des Maschinenschlittens 12 über ein angetriebenes Muttersystem erfolgen. In diesem Falle dreht die Spindelmutter auf der rotatorisch feststehenden, in axialer Richtung aber nachgebenden Kugelrollspindel 13.

Anstelle des Kugelrollspindelantriebes können auch Zahnstangen/Ritzelantriebe mit in Vorschubrichtung nachgebenden Zahnstangen oder andere, in verwandter Weise an einen Motor angekoppelte schwingungsfähige Mechaniken vorgesehen sein.

## Patentansprüche

**1.**  Verfahren zur Erweiterung der Bandbreite eines Antriebssystems mit einem Motor (10) und angekoppelter schwingungsfähiger Mechanik (12, 13), die vorzugsweise auf Kugelrollspindelsystemen basiert, mit einem Geschwindigkeitsregelkreis (19), in dem der Motor (10) liegt, mit einem Lageregelkreis (15) mit Lagemesssystem und mit einer Feder (22), die einen Maschinenschlitten (12) in Vorschubrichtung gegen ein Maschinenbett (23) nachgiebig abstützt und so nachgiebig gestaltet ist, dass die Tilgerfrequenz unterhalb der Resonanzfrequenz ($\omega_M$) der Mechanik (12, 13) zu liegen kommt,
**dadurch gekennzeichnet, dass** die abstützende Federsteifigkeit (22) mit einem Dämpfer (20) so bedämpft wird, dass der Amplitudengang der Mechanik (12, 13) bei der Tilgerfrequenz geglättet wird.

**2.**  Verfahren nach Anspruch 1,
**dadurch gekennzeichnet, dass** ein weiterer Geschwindigkeitsregelkreis (16) unter Einbeziehung der schwingungsfähigen Mechanik (12, 13) eingesetzt wird, der dem Geschwindigkeitsregelkreis (18) des Motors (10) kaskadenförmig überlagert ist.

**3.**  Verfahren nach Anspruch 2,
**dadurch gekennzeichnet, dass** der weitere Geschwindigkeitsregelkreis (16) ein Netzwerk (17) enthält, das über die Beschleunigung ($\ddot{x}_M$) der Mechanik (12, 13) eine Phasenrückdrehung im weiteren Geschwindigkeitsregelkreis (16) erzeugt.

**4.**  Vorschubantrieb zur Durchführung des Verfahrens nach einem der Ansprüche 1 bis 3, mit einem Motor (10) und einem durch ihn antreibbaren Antriebselement (13), vorzugsweise einer Kugelrollspindel, das durch einen Dämpfer (20) in Vorschubrichtung gedämpft ist,
**dadurch gekennzeichnet, dass** der Dämpfer (20) den Amplitudengang der Mechanik (12, 13) bei der Tilgerfrequenz glättet.

**5.**  Vorschubantrieb nach Anspruch 4,

**dadurch gekennzeichnet, dass** das Antriebselement (13) über wenigstens ein federndes Axiallager (24) abgestützt ist.

6. Vorschubantrieb nach Anspruch 5,
**dadurch gekennzeichnet, dass** das Axiallager (24) in einem in Achsrichtung des Antriebselementes (13) nachgiebigen Maschinenteil (21) aufgenommen ist.

7. Vorschubantrieb nach Anspruch 6,
**dadurch gekennzeichnet, dass** das Maschinenteil (21) über wenigstens eine Feder (22) in Achsrichtung des Antriebselementes (13) abgestützt ist.

8. Vorschubantrieb nach Anspruch 6 oder 7,
**dadurch gekennzeichnet, dass** das Maschinenteil (21) durch wenigstens ein Dämpfungselement (20) gegen ein Maschinenbett (23) abgestützt ist.

9. Vorschubantrieb nach Anspruch 8,
**dadurch gekennzeichnet, dass** das Dämpfungselement (20) eine geschwindigkeitsproportionale Dämpfung aufweist.

10. Vorschubantrieb nach einem der Ansprüche 4 bis 9,
**dadurch gekennzeichnet, dass** ein Maschinenschlitten (12) sich gegen das Antriebselement (13) axial abstützt.

11. Vorschubantrieb nach einem der Ansprüche 6 bis 10,
**dadurch gekennzeichnet, dass** der Motor (10) am Maschinenteil (21) angeordnet ist.

12. Vorschubantrieb nach Anspruch 10 oder 11,
**dadurch gekennzeichnet, dass** das Antriebselement (13) axial federnd nachgibt, aber rotatorisch steht und die Bewegung des Maschinenschlittens (12) über ein angetriebenes Muttersystem erfolgt.

13. Vorschubantrieb nach einem der Ansprüche 10 bis 12,
**dadurch gekennzeichnet, dass** das Antriebselement (13) aus einer Zahnstange besteht, die in Vorschubrichtung federnd nachgibt und die Bewegung des Maschinenschlittens (12) über ein Zahnstangen/Ritzelsystem erfolgt.

**Claims**

1. Process for expanding the bandwidth of a drive system comprising a motor (10) and coupled vibratory mechanical components (12, 13), preferably based on a ball screw system with an automatic speed control system closed loop (19) including the motor (10), with a closed loop positioning system (15) with a position measuring system and with a spring (22), supporting elastically a machine slide (12) in the direction of feed against a machine bed (23) and shaped so elastically, that the absorber frequency lowers down to be situated below the resonant frequency ($\omega_M$) of the mechanics (12, 13),
**characterised in that** the supporting spring stiffness (22) is thus dampened by a damper (20), that the amplitude response of the mechanics (12, 13) is smoothed at the absorber frequency.

2. Process according to claim 1,
**characterised in that** a further speed control system closed loop (16) is implanted, cascade-shaped superimposing the speed control system closed loop (18) of the motor (10).

3. Process according to claim 2,
**characterised in that** the further speed control system closed loop (16) includes a network (17), producing a retardation of phase within the further speed control system closed loop (16) via the acceleration ($X_M$) of the mechanics (12, 13).

4. Feeder drive for performing the process according to one of the claims 1 to 3 with a motor (10) and a driving element (13) which can be driven by the motor, preferably a ball screw spindle, dampened by a damper (20) in the direction of the feed,
**characterised in that** the damper (20) smoothes the amplitude response of the mechanics (12, 13) at the absorber frequency.

5. Feeder drive according to claim 4,
**characterised in that** the driving element (13) is supported by at least one springy thrust bearing (24).

6. Feeder drive according to claim 5,
**characterised in that** the thrust bearing (24) is accommodated within a machine member (21), yielding in the direction of axis of the driving element (13).

7. Feeder drive according to claim 6,
**characterised in that** the machine member (21) is supported by at least one spring (22) in the direction of axis of the driving element (13).

8. Feeder drive according to claim 6 or 7,
**characterised in that** the machine member (21) is supported by at least one damping element (20) against a machine bed (23).

9. Feeder drive according to claim 8,
**characterised in that** the damping element (20) comprises a damping proportional to speed.

10. Feeder drive according to one of the claims 4 to 9,
**characterised in that** a machine slide (12) supports itself axially against the driving element (13).

11. Feeder drive according to one of the claims 6 to 10,
**characterised in that** the motor (10) is placed at the machine member (21).

12. Feeder drive according to claim 10 or 11,
**characterized in that** the driving element (13), axially springy gives way but stands rotationally and the movement of the machine slide (12) takes place via a driven nut system.

13. Feeder drive according to one of the claims 10 to 12,
**characterized in that** the driving element (13) is made of a toothed rack, giving way springy in the direction of the feed and that the movement of the machine slide (12) takes place via a rack-and-pinion system.

**Revendications**

1. Procédé d'extension de la largeur de bande d'un système d'entraînement comprenant un moteur (10) et un système mécanique oscillant couplé (12, 13), de préférence sur la base de systèmes à vis à billes avec un circuit de réglage de vitesse (19) dans lequel le moteur (10) est situé, avec une régulation de position (15) en boucle fermée avec un système de mesure de position et avec un ressort (22) supportant élastiquement un chariot de machine (12) en direction de l'avance contre un socle de machine (23) et étant formé élastiquement de telle façon que la fréquence d'amortisseur se trouve au-dessous de la fréquence de résonance ($\omega_M$) de la mécanique (12, 13),
**caractérisé en ce que** la raideur de ressort supportante (22) est amortie avec un amortisseur (20) de telle façon que la réponse en amplitude de la mécanique (12, 13) est lissée lors de la fréquence d'amortisseur.

2. Procédé selon revendication 1,
**caractérisé en ce qu'**un circuit de réglage de vitesse supplémentaire (16) comprenant la mécanique oscillatoire (12, 13), est implanté, lequel est superposé le circuit de réglage de vitesse (18) du moteur (10) en forme de cascade.

3. Procédé selon revendication 2,
**caractérisé en ce que** le circuit supplémentaire de réglage de vitesse (16) contient un réseau (17), lequel produit par l'accélération ($X_M$) de la mécanique (12, 13) un mouvement rétrograde en phase dans le circuit supplémentaire de réglage de vitesse (16).

4. Commande d'avance pour la mise en oeuvre selon une des revendications 1 à 3 avec un moteur (10) et un élément d'entraînement (13), de préférence une vis à billes, pouvant être propulsé par celui-ci et amortie par un amortisseur (20) en direction de l'avance,

**caractérisée en ce que** l'amortisseur (20) lisse la réponse en amplitude de la mécanique (12, 13) lors de la fréquence d'amortisseur.

5. Commande d'avance selon revendication 4,
   **caractérisée en ce que** l'élément d'entraînement (13) est supporté par au moins une butée axiale à ressort (24).

6. Commande d'avance selon revendication 5,
   **caractérisée en ce que** la butée axiale (24) est montée sur une pièce de machine souple (21) dans la direction d'axe d'élément d'entraînement (13).

7. Commande d'avance selon revendication 6,
   **caractérisée en ce que** la pièce de machine (21) est supportée par au moins un ressort (22) dans la direction d'axe d'élément d'entraînement (13).

8. Commande d'avance selon revendication 6 ou 7,
   **caractérisée en ce que** la pièce de machine (21) est supportée par au moins un élément d'amortissement (20) contre un socle de machine (23).

9. Commande d'avance selon revendication 8,
   **caractérisée en ce que** l'élément d'amortissement (20) comprend un amortissement proportionnel à la vitesse.

10. Commande d'avance selon une des revendications 4 à 9,
    **caractérisée en ce qu'**un chariot de machine (12) se supporte axialement contre l'élément d'entraînement (13).

11. Commande d'avance selon une des revendications 6 à 10,
    **caractérisée en ce que** le moteur (10) est disposé à la pièce de machine (21).

12. Commande d'avance selon revendication 10 ou 11,
    **caractérisée en ce que** l'élément d'entraînement (13) se relâche axialement à la façon d'un ressort, mais est rotativement fixe et que le mouvement du chariot de machine (12) a lieu par l'intermédiaire d'un système d'écrou entraîné.

13. Commande d'avance selon une des revendications 10 à 12,
    **caractérisée en ce que** l'élément d'entraînement (13) se compose d'une crémaillière qui se relâche à la façon d'un ressort dans la direction d'avance et que le mouvement du chariot de machine (12) a lieu par un système crémaillière-engrenage.

Fig. 1

Fig. 2

Fig. 3

Fig. 4

Fig. 5

Resonanzfrequenz   Tilgerfrequenz

Fig. 6

_Fig. 7_

Tilgerfrequenz    Resonanzfrequenz

_Fig. 8_

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10135220 A1
- DE 3729649
- DE 10117460 A1

**In der Beschreibung aufgeführte Nicht-Patentliteratur**

- Analyse und Beurteilung von Lagesteuerungen für numerisch gesteuerte Werkzeugmaschinen. **Boelke, K.** Dr.-Ing. Diss. ISW. Springer-Verlag, 1977

- Digitale Lageregelung für Maschinen mit schwach gedämpften schwingungsfähigen Bewegungsachsen. **Swoboda, W.** Dr.-Ing. Diss. ISW. Springer-Verlag, 1987